# FASCICULE DE BREVET EUROPEEN

(11) **EP 0 863 055 B1**
(45) Date de publication et mention de la délivrance du brevet: **21.04.2004**
(21) Numéro de dépôt: 98440028.3
(22) Date de dépôt: 19.02.1998
(51) Int. Cl.: B60R 16/02

(54) **Système de bridage pour câble électrique plat**
Laschensystem für ein elektrisches Flachkabel
Flange system for an electric cable

(30) Priorité: 28.02.1997 FR 9702588
(43) Date de publication de la demande: 09.09.1998
(73) Titulaire: Delphi Technologies, Inc., Troy Michigan 48007 (US)
(72) Inventeur: Helfter, Marc, 67114 Eschau (FR)
(74) Mandataire: Littolff, Denis

(56) Documents cités:
- EP-A- 0 703 119
- EP-A- 0 706 914
- EP-A- 0 718 160
- DE-U- 29 617 237
- GB-A- 2 301 232

## Description

La présente invention concerne un système de bridage pour câble électrique plat surmoulé à au moins un brin, permettant de l'arrimer en au moins en endroit dans le logement dans lequel il se déploie.

Un système de bridage selon le préambule de la revendication est connu du domment EP-A-0 703 119.

Selon un exemple particulier, utilisé dans la suite pour éclairer la description, le système de bridage de l'invention s'applique à des câbles plats ou en ruban utilisés avec des contacts tournants, notamment dans le domaine de l'automobile.

Des contacts tournants sont en effet utilisés pour assurer la transmission de signaux électriques entre la colonne de direction et le volant, depuis et à destination respectivement de commandes disposées sur le volant (radio, téléphone, avertisseur sonore, etc...), et d'organes agencés dans ou sur ledit volant (airbag).

Bien entendu, on trouve des câbles plats dans bien d'autres applications, et elles sont à ce titre concernées également par le système de l'invention.

Dans l'exemple précité, le contact tournant sert d'une manière générale à transmettre des informations électriques entre deux pièces, l'une étant en rotation par rapport à l'autre. Parmi les techniques utilisées pour réaliser cette transmission, la plus ancienne fait appel à des contacts frottants du type balais comme on en trouve par exemple sur les collecteurs de moteurs à courant continu. L'inconvénient majeur de cette technique est que la transmission n'est pas toujours assurée : il se produit des microcoupures de quelques millisecondes, qui interdisent l'utilisation de ces contacts pour commander des organes de sécurité tels que des airbags, nécessitant un temps de réaction très bref et une transmission continue.

C'est pourquoi on a recourt aux câbles enroulés, qui garantissent le passage des signaux quelle que soit la position relative des éléments en rotation. Dans l'exemple du système de direction de véhicule, le contact tournant est assemblé sur un support monté sur la colonne de direction, ou dans le volant.

Des brins de câble sortent de chaque élément du contact tournant, connectés soit aux organes du côté du volant, soit au faisceau du véhicule du côté de la colonne de direction, ladite connexion étant réalisée au moyen de connecteurs appropriés.

Entre la sortie desdits éléments et le lieu de leur connexion, les câbles sont sujets, dans les cavités et/ou logements dans lesquels ils se déploient, à des mouvements incontrôlés, par exemple dus aux efforts répercutés par le véhicule, et qui peuvent générer des contacts indésirables, des vibrations, frottements, etc... susceptibles de provoquer des bruits qu'il est souhaitable d'éviter.

C'est d'autant plus vrai que les câbles plats présentent une protection externe qui les rigidifie, du type gaine surmoulée en matériau plastique, ledit surmoulage présentant le plus souvent un motif ne couvrant que partiellement le câble interne.

Le moyen traditionnellement utilisé pour empêcher les bruits consiste à enserrer les câbles dans des brides du type anneaux de serrage disposés dans les logements et cavités traversés par ceux-ci.

Cette solution oblige cependant à prévoir des dispositifs de bridage dans des endroits fixes, parfois peu aisés d'accès, sans savoir à l'avance à quel endroit sur le câble lesdits dispositifs s'appliqueront, d'où une efficacité pas toujours optimale.

Dans la plupart des cas, il faut en outre effectuer un serrage manuel, dont la précision est aléatoire et qui peut s'avérer, selon la localisation respective du câble et du moyen de serrage, difficile à mettre en oeuvre. Enfin, le bridage manuel dans ces conditions peut générer une perte de temps au cours du montage.

L'invention remédie à ces problèmes, et propose un système plus précis, sans serrage, procurant de surcroît une économie de pièces, et très souple à mettre en oeuvre.

Le montage est au surplus grandement simplifié, notamment du fait d'une liberté de localisation des moyens de bridage sur les câbles, mais également à cause de la conception même desdits moyens.

Enfin, l'aspect économique est également très favorable, car le système de l'invention n'impose pas de surcoûts de production par rapport à la production des câbles plats tels que décrits auparavant, ou en tout cas des dépassements de coûts négligeables.

Ces résultats et d'autres, sont obtenus grace au système de bridage de l'invention selon la revendication 1.

L'intégration du bridage sur les câbles proprement dits supprime la nécessité d'avoir des pièces complexes au niveau des bâtis auxquels doivent être fixés lesdits câbles.

Le constructeur automobile réalise par conséquent des économies, alors que le surcoût est très faible pour l'équipementier en charge du contact tournant.

De plus, la localisation des moyens de bridage sur les câbles permet de choisir très précisément les zones dudit câble qui seront à fixer, améliorant ainsi la tenue de ces câbles lorsqu'ils sont soumis aux contraintes du véhicule en mouvement.

Enfin, le montage de l'accessoire est simplifié et peut être réalisé plus rapidement, procurant un abaissement supplémentaire des coûts.

Lesdits moyens de bridage sont constitués d'excroissances d'allure plane se développant dans le plan du câble plat à partir et vers l'extérieur dudit câble.

Pour pouvoir coopérer avec un tel moyen de bridage, ledit plot de fixation comporte par exemple un corps cylindrique surmonté d'une tête d'épaisseur supérieure, d'allure semi-sphérique, prévue pour s'enclipser dans l'orifice de ladite excroissance.

De préférence, afin d'améliorer son élasticité radiale, le plot est au surplus fendu axialement.

Selon une autre configuration possible, lesdits moyens de bridage sont constitués d'une excroissance dont le corps principal se développe à partir et vers l'extérieur du câble plat, ledit corps étant terminé par une partie de largeur supérieure au tronçon qui la précède, prévue pour s'enficher dans un orifice pratiqué dans une pièce fixé par rapport au logement.

La relation d'interaction pièce mâle/pièce femelle, qui permet la fixation la plupart du temps par clipsage, est alors inversée par rapport à la première configuration.

Ladite relation est appliquée de manière un peu différente lorsque lesdits moyens de bridage prennent la forme d'une patte souple se développant à partir et vers l'extérieur du câble plat, et comportant successivement un moyen femelle et un moyen mâle destinés à coopérer de sorte qu'en repliant ladite patte en position de fixation desdits moyens mâle et femelle, une boucle permettant l'arrimage de la patte autour d'un élément fixe du logement puisse être réalisée.

Dans ce cas, l'arrimage du câble au bâti se fait par enroulement de la patte autour d'un organe de forme adéquate, la fixation proprement dite ayant lieu sur la patte.

Une variante possible des configurations apparaissant auparavant peut consister en ce que ledit moyen de bridage est constitué d'une excroissance d'allure plane se développant à partir et vers l'extérieur du câble surmoulé, dont l'extrémité éloignée dudit câble comporte un plot de fixation perpendiculaire à l'excroissance, comportant un corps cylindrique terminé par une tête d'épaisseur supérieure.

Comme dans le dispositif homologue précité, ledit plot peut alors comporter une fente axiale améliorant son élasticité radiale.

Les solutions présentées montrent à quel point le système de bridage de l'invention peut être mis en oeuvre d'une manière souple.

Ladite invention va à présent être décrite en détail, au moyen des figures annexées, pour lesquelles :
- La figure 1 est une vue perspective d'un câble plat reliant un contact tournant et un connecteur d'extrémité, comportant des languettes de bridage selon l'invention.
- Les figures 2a et 2b représentent respectivement une vue de face et une coupe d'une languette dotée d'un orifice.
- Les figures 3a et 3b montrent une configuration dans laquelle la languette est munie d'un plot de clipsage.
- Les figures 4a et 4b sont une variante possible de la configuration des figures 3a et 3b, dans laquelle le plot de clipsage est disposé axialement par rapport à la languette, et
- Les figures 5a et 5b représentent la configuration à patte comportant une liaison mâle et une liaison femelle.

Ces figures montrent quelques exemples de configurations possibles de l'invention, mais ne sont pas limitatives de cette dernière. Les mêmes signes de références désignent les mêmes éléments lorsqu'ils apparaissent sur plusieurs figures.

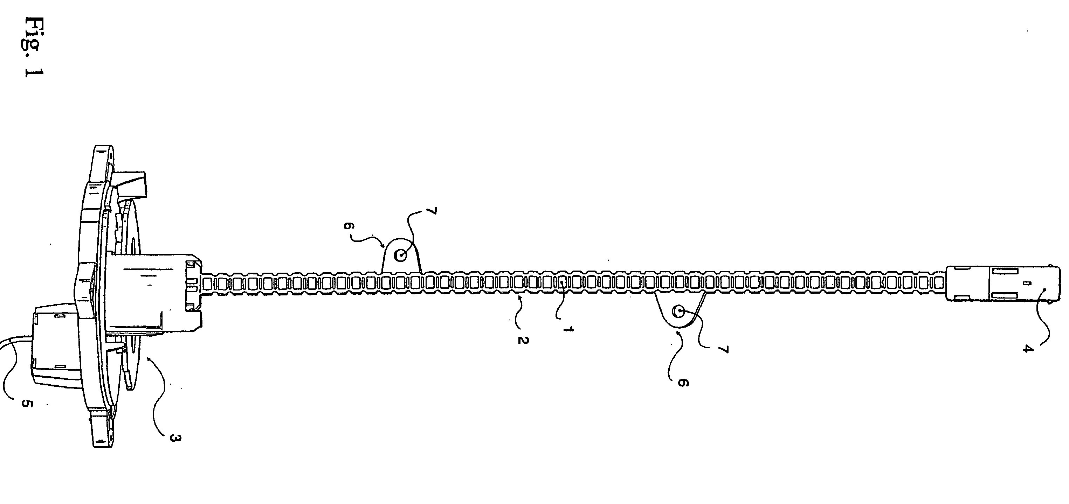

La figure 1, donnant une image plus globale du système, permet une meilleure compréhension d'un contexte d'application de l'invention. Le câble plat et souple, référencé (1), est surmoulé par une gaine partielle (2) de protection en matériau plastique, visant notamment à le protéger dans la zone exposée entre le contact tournant (3) et le connecteur (4) d'extrémité.

Le câble (1) prend la forme d'un ruban doté de brins électriques et capable de s'enrouler dans une gorge de l'un des éléments du contact tournant (3), à laquelle l'une des extrémités dudit ruban est fixée, l'autre extrémité étant solidaire du second élément. Lorsque les deux éléments sont en rotation l'un par rapport à l'autre, le ruban-câble s'enroule dans un sens ou dans l'autre, jusqu'à enroulement complet qui marque la butée finale du mouvement.

Comme on l'a dit, les informations électriques ne font que transiter par le contact tournant (3). Elles proviennent d'un endroit précis, et doivent être envoyées à l'adresse d'un ou plusieurs éléments situés à un autre endroit. D'où les parties exposées, libres des connexions, dont le câble (1) surmoulé (2) est un exemple. Une autre liaison est réalisée à l'aide de fils électriques (5) classiques situés sous le capteur tournant (3), qui matérialisent le support d'information relié au second élément du capteur rotatif (3).

Les excroissances (6) munies des orifices (7) sont le coeur de l'invention : le surmoulage traditionnel (2) de protection du câble plat est prolongé en des excroissances (6) ou languettes prenant diverses formes, permettant la fixation du câble (1) avec un organe correspondant, ici de type plot de clipsage prévu dans le bâti de la cavité ou du logement dans lequel ledit câble est supposé se déployer (non représenté).

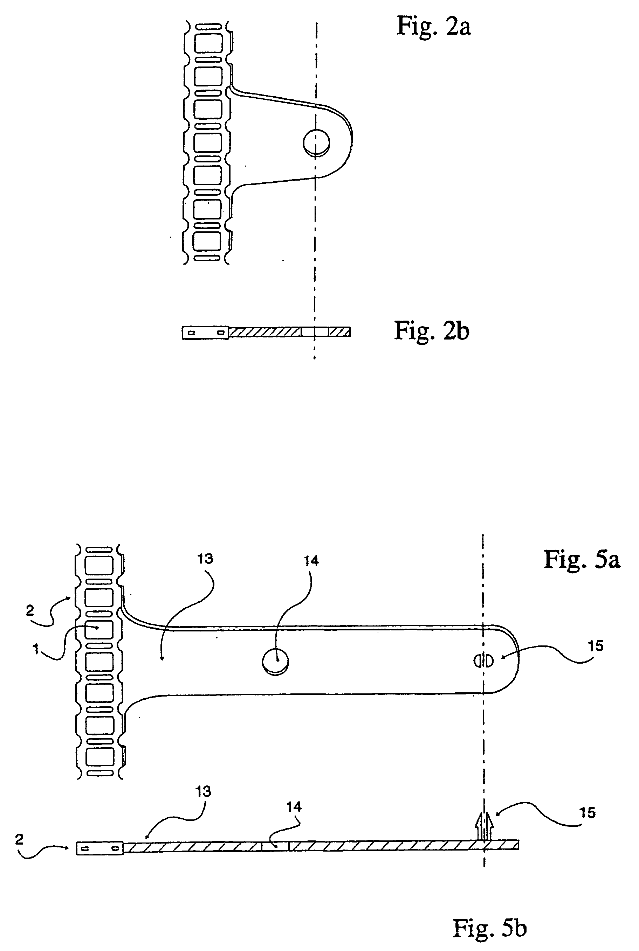

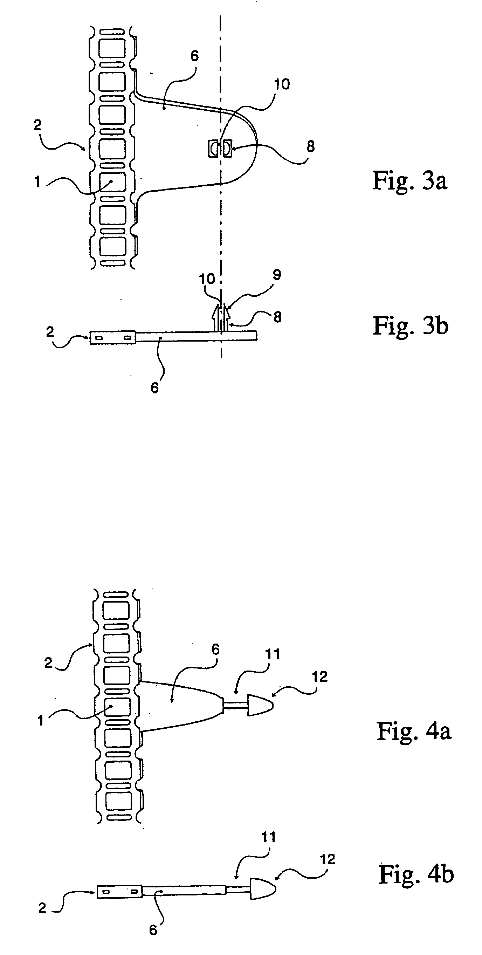

Parmi les exemples possibles, outre celui qui est représenté aux figures 1 et 2a-2b, se trouve une configuration inverse apparaissant en figures 3a-3b : au lieu de l'orifice (7) des figures précédentes, l'organe de fixation est en l'espèce un plot ou téton (8) doté d'une tête (9) plus large que le corps, l'ensemble étant fendu axialement (10) de manière à pouvoir se clipser dans un orifice de taille correspondante du bâti (non représenté).

La variante apparaissant en figures 4a-4b conserve un plot ou téton (11) doté d'une tête (12) plus large que le corps, mais l'axe de ce téton (11) est dans le prolongement de l'axe de l'excroissance (6), à l'inverse de la configuration précédente dans laquelle le plot (8) est perpendiculaire à la languette (6). L'organe femelle avec lequel ce téton (11) est destiné à coopérer n'est pas non plus représenté, car il est solidaire du bâti.

En figures 5a-5b, la languette (6) est remplacée par une patte (13) sensiblement plus allongée, dotée simultanément d'un orifice (14) et d'un plot ou téton (15) coopérant l'un avec l'autre. La partie de la languette (13) située entre ledit orifice (14) et ledit plot (15), lequel est de préférence fendu axialement, est en réalité la partie «active» qui s'enroule autour de l'élément fixe (non représenté) solidaire du bâti.

Dans tous les cas précités, les excroissances ou languettes viennent de moulage avec le surmoulage (2) du câble plat (1) et ne nécessitent que des changements mineurs dans la conception des moules. Le surcoût est négligeable, et permet d'aboutir à une solution techniquement intéressante et plus satisfaisante que les moyens de fixation utilisés auparavant, du fait notamment de son intégration à la conception du câble proprement dit.

## Revendications

1. Système de bridage pour câble électrique plat (1) à au moins un brin surmoulé (2), permettant de l'arrimer en au moins un endroit dans le logement dans lequel il se déploie, le surmoulage (2) entourant les brins du câble plat (1) intègre des moyens de bridage en nombre correspondant au nombre d'arrimage désiré, lesdits moyens étant prévus pour coopérer avec des éléments fixes par rapport audit logement et ce dans une zone située entre les moyens de connexion d'extrémité dudit câble électrique plat (1), **caractérisé en ce que** lesdits moyens de bridage sont constitués d'au moins une excroissance (6) d'allure plane se développant dans le plan du câble plat (1), à partir et vers l'extérieur dudit câble (1).

2. Système de bridage pour câble électrique plat surmoulé selon la revendication 1, **caractérisé en ce que** les excroissances (6) sont dotées d'un orifice (7) destiné à coopérer avec un plot de fixation solidarisé au logement.

3. Système de bridage pour câble. électrique plat surmoulé selon la revendication 2, **caractérisé en ce que** ledit plot de fixation comporte un corps cylindrique surmonté d'une tête d'épaisseur supérieure, d'allure semi-sphérique, prévue pour s'enclipser dans l'orifice (7) de ladite excroissance (6).

4. Système de bridage pour câble électrique plat surmoulé selon la revendication 3, **caractérisé en ce que** ledit plot est fendu axialement.

5. Système de bridage pour câble électrique plat surmoulé selon la revendication 1, **caractérisé en ce que** lesdits-moyens de bridage sont constitués d'une- excroissance dont le corps principal (6) se développe à partir et vers l'extérieur du câble plat (1), ledit corps (6) étant terminé par une tête (12) de: largeur supérieure au tronçon (11) qui la précède prévue pour s'enficher dans un orifice pratiqué dans une pièce fixe par rapport au logement.

6. Système de bridage pour câble électrique plat surmoulé selon la revendication 1, **caractérisé en ce que** les excroissances prennent la forme d'une patte souple (13) se développant à partir et vers l'extérieur du câble plat (1), et comportant successivement un moyen femelle (14) et un moyen mâle (15) destinés à coopérer de sorte qu'en repliant ladite patte (13) en position de fixation desdits moyens mâle (15) et femelle (14), une boucle permettant l'arrimage de la patte (13) autour d'un élément fixe du logement puisse être réalisée.

7. Système de bridage pour câble électrique plat surmoulé selon la revendication 1, **caractérisé en ce que** l'excroissance (6) est d'allure plane se développant à partir et vers l'extérieur du câble surmoulé (1), dont l'extrémité éloignée dudit câble (1) comporte un plot (8) de fixation perpendiculaire à l'excroissance, comportant un corps cylindrique terminé par une tête (9) d'épaisseur supérieure.

8. Système de bridage pour câble électrique plat surmoulé selon la revendication 7, **caractérisé en ce que** ledit plot (8) comporte une fente axiale (10).

## Claims

1. Clamping system for a flat electric cable (1) with at least one over-moulded conductor (2), which makes it possible to stow the cable in at least one location in the receptacle in which it extends, the over-moulding (2) which surrounds the conductors of the flat cable (1) incorporating clamping means of a number corresponding to the number of stowage elements required, the said means being designed to co-operate with elements which are fixed relative to the said receptacle, and in an area situated between the end connection means of the said flat electric cable (1), **characterised in that** the said clamping means consist of at least one protuberance (6) with a flat form which extends on the plane of the flat cable (1), from and towards the exterior of the said cable (1).

2. Clamping system according to claim 1 for an over-moulded flat electric cable, **characterised in that** the protuberances (6) are provided with an aperture (7) which is designed to co-operate with a securing stud which is integral with the receptacle.

3. Clamping system according to claim 2 for an over-moulded flat electric cable, **characterised in that** the said securing stud comprises a cylindrical body which is surmounted by a head with a greater thickness, with a semi-spherical form, which is designed to be snapped into the aperture (7) in the said protuberance (6).

4. Clamping system according to claim 3 for an over-moulded flat electric cable, **characterised in that** the said stud is split axially.

5. Clamping system according to claim 1 for an over-moulded flat electric cable, **characterised in that** the said clamping means consist of a protuberance, the main body (6) of which extends from and towards the exterior of the flat cable (1), the said body (6) ending in a head (12) with a width which is greater than the section (11) which precedes it, and is designed to be plugged into an aperture provided in a part which is fixed relative to the receptacle.

6. Clamping system according to claim 1 for an over-moulded flat electric cable, **characterised in that** the protuberances take the form of a flexible lug (13) which extends from and towards the exterior of the flat cable (1), and comprises in succession a female means (14) and a male means (15) which are designed to co-operate such that when the said lug (13) is folded in the position of securing of the said male (15) and female (14) means, a loop which permits stowage of the lug (13) around a fixed element of the receptacle can be provided.

7. Clamping system according to claim 1 for an over-moulded flat electric cable, **characterised in that** the protuberance (6) has a flat form which extends from and towards the exterior of the over-moulded cable (1), and the end of which that is distant from the said cable (1) comprises a securing stud (8) which is perpendicular to the protuberance, comprising a cylindrical body which ends in a head (9) with a greater thickness.

8. Clamping system according to claim 7 for an over-moulded flat electric cable, **characterised in that** the said stud (8) comprises an axial slot (10).

## Patentansprüche

1. Anbringungssystem für Elektroflachkabel (1) mit wenigstens einer eingegossenen Ader (2), wobei das System ermöglicht, das Kabel an wenigstens einem Ort in dem Aufnahmesitz, in dem es sich entfaltet, unterzubringen, wobei die Hülle (2), die die Adern des Flachkabels (1) umgibt, Anbringungsmittel in einer Anzahl aufweist, die der gewünschten Anzahl von Unterbringungen entspricht, wobei die Mittel so beschaffen sind, dass sie mit Mitteln zusammenwirken, die in Bezug auf den Aufnahmesitz fest sind, und dies in einer Zone, die sich zwischen den Endanschlussmitteln des Elektroflachkabels (1) befindet, **dadurch gekennzeichnet, dass** die Anbringungsmittel aus wenigstens einem Ansatz (6) mit ebenem Verlauf bestehen, der sich in der Ebene des Flachkabels (1) ausgehend von dem Kabel (1) und in dessen äußere Umgebung hinein erstreckt.

2. Anbringungssystem für eingegossenes Elektroflachkabel nach Anspruch 1, **dadurch gekennzeichnet, dass** die Ansätze (6) mit einer Öffnung (7) versehen sind, die dazu bestimmt sind, mit einem am Aufnahmesitz fest angebrachten Befestigungsstift zusammenzuwirken.

3. Anbringungssystem für eingegossenes Elektroflachkabel nach Anspruch 2, **dadurch gekennzeichnet, dass** der Befestigungsstift einen zylindrischen Körper aufweist, über dem ein Kopf mit größerer Dicke und mit halbkugelförmigem Verlauf angebracht ist, der dazu vorgesehen ist, in der Öffnung (7) des Ansatzes (6) einzurasten.

4. Anbringungssystem für eingegossenes Elektroflachkabel nach Anspruch 3, **dadurch gekennzeichnet, dass** der Stift axial geschlitzt ist.

5. Anbringungssystem für eingegossenes Elektroflachkabel nach Anspruch 1, **dadurch gekennzeichnet, dass** die Anbringungsmittel aus einem Ansatz gebildet sind, dessen Hauptkörper (6) sich ausgehend von dem Flachkabel (1) und in dessen äußere Umgebung erstreckt, wobei der Körper (6) in einem Kopf (12) endet, der eine Breite aufweist, die größer als das ihm vorhergehende Teilstück (11) ist, und dazu vorgesehen ist, in einer Öffnung einzurasten, die in einem in Bezug auf den Aufnahmesitz festen Teil ausgespart ist.

6. Anbringungssystem für eingegossenes Elektroflachkabel nach Anspruch 1, **dadurch gekennzeichnet, dass** die Ansätze die Form eines elastischen Hakens (13) haben, der sich ausgehend von dem Flachkabel (1) und in dessen äußere Umgebung hinein erstreckt, und nacheinander ein Buchsenmittel (14) und ein Steckmittel (15) umfasst, die dazu bestimmt sind, in der Weise zusammenzuwirken, dass durch Falten des Hakens (13) in die Befestigungsposition des Steckmittels (15) und des Buchsenmittels (14) eine Schleife, die das Anbringen des Hakens (13) um ein festes Element des Aufnahmesitzes ermöglicht, verwirklicht werden kann.

7. Anbringungssystem für eingegossenes Elektroflachkabel nach Anspruch 1, **dadurch gekennzeichnet, dass** der Ansatz (6) einen ebenen Verlauf hat, der sich ausgehend bei dem eingegossenen Kabel (1) in dessen äußere Umgebung hinein erstreckt und wovon ein entferntes Ende einen Befestigungsstift (8) aufweist, der zu dem Ansatz senkrecht ist und einen zylindrischen Körper umfasst, der in einem Kopf (9) mit größerer Dicke endet.

8. Anbringungssystem für eingegossenes Elektroflachkabel nach Anspruch 7, **dadurch gekennzeichnet, dass** der Stift (8) einen axialen Schlitz (10) aufweist.
